# EUROPEAN PATENT APPLICATION

(11) **EP 4 825 888 A1**
(43) Date of publication of application: **21.10.2026**
(21) Application number: 24904033.8
(22) Date of filing: 20.11.2024
(51) Int. Cl.: C08F 210/16, C08F 4/654, C08F 4/649, D01F 6/30, D04H 1/4326, D01D 5/08

(54) **POLYETHYLENE WITH EXCELLENT HEAT RESISTANCE**

(30) Priority: 13.12.2023 KR 20230180761
(71) Applicant: Hanwha Solutions Corporation, Seoul 04541 (KR)
(72) Inventor: LIM, Yu Jeong, Seoul 04541 (KR); PARK, Seong In, Seoul 04541 (KR); PARK, Jeong Hyun, Seoul 04541 (KR)
(74) Representative: Berggren Oy
(86) International application number: PCT/KR2024/018380
(87) International publication number: WO 2025/127467

(57) **Abstract**

The polyethylene of the present invention is characterized in that it has an oxidative induction time of 10 minutes or more at a temperature of 210 to 230°C as measured by a rotational rheometer, and a peak corresponding to polypropylene is present upon NMR measurement.

## Description

### [Technical Field]

The present invention relates to polyethylene having excellent heat resistance. More specifically, the present invention relates to polyethylene having excellent heat resistance and adhesive properties.

### [Background Art]

A polyethylene resin for spinning is required to have a high melt index of 15 g/10 min or more (15 MI or more) due to process characteristics. In order to increase the melt index of polyethylene, a method of relatively increasing the proportion of low-molecular-weight components has been considered, and such polyethylene having a high proportion of low-molecular-weight components has advantages in extrusion processability (extrusion load) and in a post-process (web-forming step).

However, the melt-spinning process is carried out at a high temperature of 200°C or more, and at this time, in the case of low-molecular-weight polyethylene, heat resistance is low, and thus the resin may be oxidized to generate carbides or gels, thereby causing monofilament breakage (fiber breakage).

Accordingly, there is a need to develop a polyethylene resin having both excellent melt-spinning processability and heat resistance.

As related prior art, there is Korean Patent No. KR10-2022-0076357.

### [Disclosure]

### [Technical Problem]

An object of the present invention is to provide polyethylene having both excellent melt-spinning processability and heat resistance, and a method for preparing the same.

Another object of the present invention is to provide polyethylene having excellent adhesiveness and tensile strength, and a method for preparing the same.

Still another object of the present invention is to provide polyethylene in which gel generation in a melt-spinning process is significantly reduced, and a method for preparing the same.

Still another object of the present invention is to provide a fiber and a nonwoven fabric formed by melt-spinning the polyethylene.

Still another object of the present invention is to provide a method for preventing yarn breakage during melt spinning of polyethylene.

The above and other objects of the present invention can all be achieved by the invention described below.

### [Technical Solution]

1. One aspect of the present invention relates to polyethylene, wherein the polyethylene is characterized in that it has an oxidative induction time of about 10 minutes or more, for example about 10 to 20 minutes, specifically about 10 to 15 minutes, at a temperature of about 210 to about 230°C as measured by a rotational rheometer, and a peak corresponding to polypropylene is present upon NMR measurement.
2. In the embodiment 1, the polyethylene may have a weight average molecular weight of about 40,000 g/mol to about 60,000 g/mol, for example about 41,000 to about 45,000 g/mol, about 45,000 to about 49,000 g/mol, about 49,000 to about 53,000 g/mol, or about 53,000 to about 59,000 g/mol, and may have a polydispersity index (PDI) of about 7 or more.
3. In the embodiments 1 to 2, the polyethylene may comprise greater than about 0 and less than or equal to about 5 wt%, for example about 1 to about 3 wt%, preferably about 1.1 to about 2 wt%, of polypropylene.
4. In the embodiments 1 to 3, the polyethylene may have, per 1 m², fewer than about 150 gels each having a maximum diameter of about 400 µm or more, for example about 1 to about 40, about 40 to about 80, or about 80 to about 140.
5. In the embodiments 1 to 4, the polyethylene may have a melt index (ASTM D1238, 190°C, 2.16 kg) of about 15 to about 40 g/10 min, for example about 15.5 to about 20 g/10 min, about 20 to about 25 g/10 min, about 25 to about 30 g/10 min, or about 30 to about 38.5 g/10 min.
6. In the embodiments 1 to 5, the polyethylene may have a melt flow ratio (MFR, 190°C, MI_{21.6}/MI_{2.16}) of about 20 to about 30, for example about 20.5 to about 23.5, about 23.5 to about 26.5, or about 26.5 to about 29.5.
7. In the embodiments 1 to 6, the polyethylene may have a density of about 0.948 to about 0.965 g/cm³, for example about 0.950 to about 0.953 g/cm³, about 0.953 to about 0.956 g/cm³, about 0.956 to about 0.960 g/cm³, or about 0.960 to about 0.963 g/cm³.
8. In the embodiments 1 to 7, the polyethylene may have a melt-spinning index (MSI) according to the following Formula 1 of about 30 to about 200, for example about 32 to about 74, about 74 to about 116, about 116 to about 158, or about 158 to about 198: [Forrmula 1] $MSI = \frac{MI \times {\left(OIT\right)}^{2} \times P}{G}$ (In Formula 1, MI is the melt index of polyethylene (ASTM D1238, 190°C, 2.16 kg) (unit: g/10 min), OIT is the oxidative induction time at a temperature of 210 to 230°C as measured by a rotational rheometer (unit: min), P is the content of polypropylene (wt%), and G is the number of gels of 400 µm or more in 1 m².)
9. In the embodiments 1 to 8, the polyethylene may have, per 1 m², fewer than about 150 gels of about 400 µm or more, for example about 1 to about 40, about 40 to about 80, or about 80 to about 140.
10. In the embodiments 1 to 9, the polyethylene may have a tensile strength measured according to ASTM D638 of about 270 Kg/cm2 or more, for example about 272 to about 278 Kg/cm2, about 278 to about 284 Kg/cm2, about 284 to about 290 Kg/cm2, or about 290 to about 298 Kg/cm2.
11. In the embodiments 1 to 10, the polyethylene is characterized in that it is used for melt spinning.
12. Another aspect of the present invention relates to polyethylene fibers. The polyethylene fibers are formed by melt-spinning the polyethylene according to any one of embodiments 1 to 11.
13. In the embodiment 12, the polyethylene fibers may have a diameter of greater than about 0 and less than about 100 µm, for example about 1 to about 25 µm, about 25 to about 50 µm, about 50 to about 75 µm, or about 75 to about 99 µm.
14. Still another aspect of the present invention relates to a nonwoven fabric. The nonwoven fabric may be formed from the polyethylene fibers of embodiment 12.
15. Still another aspect of the present invention relates to a method for preparing polyethylene, the method comprising polymerizing ethylene in the presence of a Ziegler-Natta catalyst.
16. In the embodiment 15, the method is characterized in that polymerization is carried out while controlling the particle size of the Ziegler-Natta catalyst to less than about 60 µm, for example about 1 to about 15 µm, about 15 to about 30 µm, about 30 to about 45 µm, or about 45 to about 59 µm.
17. In the embodiments 15 to 16, the method may comprise polymerization by charging a propylene monomer in an amount of greater than about 0 and less than or equal to about 5 wt%, for example about 1 to about 3 wt%, preferably about 1.1 to about 2 wt%, based on the total monomer content.
18. Still another aspect of the present invention relates to a method for preventing yarn breakage during melt spinning of polyethylene, the method being characterized by using polyethylene polymerized by controlling the particle size of a Ziegler-Natta catalyst.
19. In the embodiment 18, the polyethylene may have an oxidative induction time of 10 minutes or more, for example about 10 to 20 minutes, specifically about 10 to about 15 minutes, at a temperature of about 210 to about 230°C as measured by a rotational rheometer.
20. In the embodiments 18 to 19, the polyethylene may have a weight average molecular weight of about 40,000 g/mol to about 60,000 g/mol, for example about 41,000 to about 45,000 g/mol, about 45,000 to about 49,000 g/mol, about 49,000 to about 53,000 g/mol, or about 53,000 to about 59,000 g/mol, and may have a polydispersity index (PDI) of 7 or more.

### [Advantageous Effects]

The present invention has the effect of providing polyethylene having excellent melt-spinning processability, heat resistance, adhesiveness, and tensile strength and significantly reduced gel generation in a melt-spinning process, a method for preparing the same, fibers and nonwoven fabrics formed by melt-spinning the polyethylene, and a method for preventing yarn breakage during melt spinning of polyethylene.

### [Best Mode]

FIG. 1 is a surface photograph of polyethylene nonwoven fabrics prepared in Examples 1 to 3 and Comparative Examples 1 to 2.
FIG. 2 shows gel permeation chromatography (GPC) measurement results of the polyethylene prepared in Examples 1 to 3 and Comparative Examples 1 to 2.
FIG. 3 shows oxidative induction time measurement results of the polyethylene prepared in Examples 1 to 3 and Comparative Examples 1 to 2.
FIG. 4 shows the NMR measurement result of Example 1.
FIG. 5 shows the NMR measurement result of Comparative Example 1.

### [Mode for Carrying Out the Invention]

Hereinafter, the present invention will be described in more detail. As used in the present specification, when "comprises," "has," "consists of," and the like are used, other parts may be added unless "only" is used. When a component is expressed in the singular, it includes the case including the plural unless specifically stated otherwise.

In interpreting components, they are construed as including an error range even if there is no separate explicit statement.

### Polyethylene

One aspect of the present invention relates to polyethylene. The polyethylene may have an oxidative induction time of about 10 minutes or more, for example about 10 to 20 minutes, specifically about 10 to 15 minutes, at a temperature of about 210 to about 230°C as measured by a rotational rheometer. Within the above range, the polyethylene has excellent heat resistance together with processability, and yarn breakage does not occur during melt spinning.

The polyethylene may have a peak corresponding to polypropylene upon NMR measurement. In a specific embodiment, the polyethylene may comprise greater than about 0 and less than or equal to about 5 wt%, for example about 1 to about 3 wt%, preferably about 1.1 to about 2 wt%, of polypropylene. Within the above range, excellent heat resistance and processability may be achieved.

In a specific embodiment, the polyethylene may have a weight average molecular weight of about 40,000 g/mol to about 60,000 g/mol, specifically about 42,000 to about 56,000 g/mol, for example about 41,000 to about 45,000 g/mol, about 45,000 to about 49,000 g/mol, about 49,000 to about 53,000 g/mol, or about 53,000 to about 59,000 g/mol. Within the above range, a balance between heat resistance and melt spinnability may be achieved.

In a specific embodiment, the polyethylene may have, per 1 m², fewer than about 150 gels each having a maximum diameter of about 400 µm or more, specifically about 1 to about 140, preferably about 1 to about 100, for example about 1 to about 40, about 40 to about 80, or about 80 to about 140. In addition, the polyethylene may have a total number of gels of fewer than about 1,600 per 1 m², for example about 1 to about 1,000, specifically about 1 to about 400, about 400 to about 800, about 800 to about 1,200, or about 1,200 to about 1,600. Within the above range, yarn breakage does not occur during melt spinning.

The polyethylene may have a melt index (ASTM D1238, 190°C, 2.16 kg) of about 15 to about 40 g/10 min, preferably about 20 to about 38 g/10 min, for example about 15.5 to about 20 g/10 min, about 20 to about 25 g/10 min, about 25 to about 30 g/10 min, or about 30 to about 38.5 g/10 min. Within the above range, extrusion processability is excellent and web formation is advantageous.

In a specific embodiment, the polyethylene may have a melt flow ratio (MFR, 190°C, MI_{21.6}/MI_{2.16}) of about 20 to about 30, for example about 22 to about 25. In a specific embodiment, the melt flow ratio (MFR, 190°C, MI_{21.6}/MI_{2.16}) may be about 20.5 to about 29.5, for example about 20.5 to about 23.5, about 23.5 to about 26.5, or about 26.5 to about 29.5. Within the above range, excellent processability is obtained.

In a specific embodiment, the polyethylene may have a density of about 0.948 to about 0.965 g/cm³, preferably about 0.950 to about 0.960 g/cm³. In a specific embodiment, the density may be about 0.950 to about 0.963 g/cm³, for example about 0.950 to about 0.953 g/cm³, about 0.953 to about 0.956 g/cm³, about 0.956 to about 0.960 g/cm³, or about 0.960 to about 0.963 g/cm³.

Further, the melt-spinning index (MSI) according to the following Formula 1 may be about 30 to about 200, preferably about 35 to about 150. In a specific embodiment, the melt-spinning index (MSI) may be about 32 to about 198, for example about 32 to about 74, about 74 to about 116, about 116 to about 158, or about 158 to about 198: [Forrmula 1] $MSI = \frac{MI \times {\left(OIT\right)}^{2} \times P}{G}$

(In Formula 1, MI is the melt index of polyethylene (ASTM D1238, 190°C, 2.16 kg) (unit: g/10 min), OIT is the oxidative induction time at a temperature of 210 to 230°C as measured by a rotational rheometer (unit: min), P is the content of polypropylene (wt%), and G is the number of gels of 400 µm or more in 1 m².)

Further, the polyethylene may have a tensile strength measured according to ASTM D638 of about 270 Kg/cm2 or more, for example about 270 to about 300 Kg/cm2. In a specific embodiment, the tensile strength may be about 272 to about 298 Kg/cm2, for example about 272 to about 278 Kg/cm2, about 278 to about 284 Kg/cm2, about 284 to about 290 Kg/cm2, or about 290 to about 298 Kg/cm2.

The polyethylene according to the above embodiment may be prepared by the following preparation method.

### Method for Preparing Polyethylene

The polyethylene may be prepared by polymerizing ethylene in the presence of a Ziegler-Natta catalyst.

In one embodiment, the Ziegler-Natta catalyst comprises: (i) a Ziegler-Natta pro-catalyst for olefin polymerization comprising a titanium compound represented by the following Chemical Formula 1, a magnesium compound represented by the following Chemical Formula 2, and an internal electron donor; (ii) an organoaluminum compound represented by the following Chemical Formula 7; and (iii) an external electron donor represented by the following Chemical Formula 3, wherein the internal electron donor comprises a first internal electron donor represented by the following Chemical Formula 4; a second internal electron donor represented by the following Chemical Formula 5; and a third internal electron donor represented by the following Chemical Formula 6, and the molar ratio of the external electron donor to the mixture is about 115 to about 130. In a specific embodiment, the molar ratio may be about 117 to about 128, for example about 117 to about 121, about 121 to about 125, or about 125 to about 128:

[Chemical Formula 1] TiXₙ(OR¹)₄₋ₙ

(In Chemical Formula 1,
R1 is one selected from the group consisting of substituted or unsubstituted C1-C20 alkyl, substituted or unsubstituted C3-C20 cycloalkyl, and substituted or unsubstituted C3-C20 aryl,
X is a halogen atom,
n is an integer of 0 to 4, and
in the substituted or unsubstituted group, the substituent is independently at least one selected from the group consisting of halogen, cyano, nitro, and C1-C8 alkyl.)

   [Chemical Formula 2] Mg(OR²)ₖX₂₋ₖ

   (In Chemical Formula 2,
   R2 is one selected from the group consisting of substituted or unsubstituted C1-C20 alkyl, substituted or unsubstituted C3-C20 cycloalkyl, and substituted or unsubstituted C3-C20 aryl,
   X is a halogen atom,
   k is an integer of 0 to 2, and
   in the substituted or unsubstituted group, the substituent is independently at least one selected from the group consisting of halogen, cyano, nitro, and C1-C8 alkyl.) 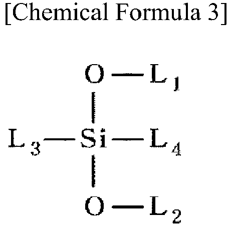 (In Chemical Formula 3,
      L1 and L2 are each independently substituted or unsubstituted C1-C20 alkyl, and in the substituted or unsubstituted group, the substituent is independently at least one selected from the group consisting of halogen, cyano, nitro, and C1-C8 alkyl,
      L3 and L4 are each independently one selected from the group consisting of substituted or unsubstituted C1-C20 alkyl and substituted or unsubstituted C3-C20 cycloalkyl, and in the substituted or unsubstituted group, the substituent is independently at least one selected from the group consisting of halogen, cyano, nitro, and C1-C8 alkyl.) 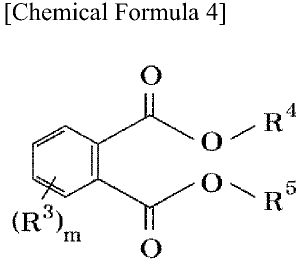 (In Chemical Formula 4,
         R³ is one selected from the group consisting of substituted or unsubstituted C1-C20 alkyl, substituted or unsubstituted C3-C20 cycloalkyl, and substituted or unsubstituted C3-C20 aryl, and in the substituted or unsubstituted group, the substituent is independently at least one selected from the group consisting of halogen, cyano, nitro, and C1-C8 alkyl,
         R⁴ and R⁵ are each independently branched C1-C20 alkyl, and
         m is an integer of 0 to 4.) 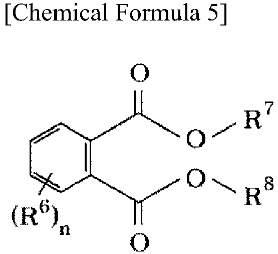 (In Chemical Formula 5,
            R⁶ is independently one selected from the group consisting of substituted or unsubstituted C1-C20 alkyl, substituted or unsubstituted C3-C20 cycloalkyl, and substituted or unsubstituted C3-C20 aryl, and in the substituted or unsubstituted group, the substituent is independently at least one selected from the group consisting of halogen, cyano, nitro, and C1-C8 alkyl,
            R⁷ is linear C1-C20 alkyl,
            R⁸ is branched C1-C20 alkyl, and
            n is an integer of 0 to 4.) 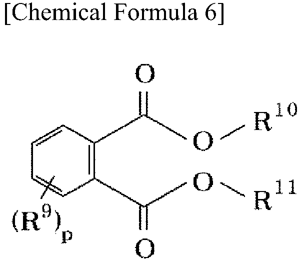 (In Chemical Formula 6,
               R⁹ is each independently one selected from the group consisting of substituted or unsubstituted C1-C20 alkyl, substituted or unsubstituted C3-C20 cycloalkyl, and substituted or unsubstituted C3-C20 aryl, and in the substituted or unsubstituted group, the substituent is independently at least one selected from the group consisting of halogen, cyano, nitro, and C1-C8 alkyl,
               R¹⁰ and R¹¹ are each independently linear C1-C20 alkyl, and
               p is an integer of 0 to 4.)

                  [Chemical Formula 7] Al(R¹³)ₚX₃₋ₚ

                  (In Chemical Formula 7,
                  R¹³ is one selected from the group consisting of a hydrogen atom, substituted or unsubstituted C1-C20 alkyl, substituted or unsubstituted C3-C20 cycloalkyl, and substituted or unsubstituted C3-C20 aryl,
                  X is a halogen atom,
                  p is an integer of 0 to 3, and
                  in the substituted or unsubstituted group, the substituent is independently at least one selected from the group consisting of halogen, cyano, nitro, and C1-C8 alkyl.)

According to one embodiment, the catalyst may comprise one kind of the external electron donor represented by Chemical Formula 3, that is, the first external electron donor alone or the second external electron donor alone.

According to one embodiment, the catalyst may be a mixture comprising two kinds of the external electron donors represented by Chemical Formula 3. In one embodiment, the catalyst may be a mixture of the first external electron donor and the second external electron donor. For example, based on 10 moles of the mixture, the first external electron donor : the second external electron donor may be included at a molar ratio of about 3:7 to about 7:3, about 4:6 to about 6:4, or about 5:5.

In one embodiment, L1 and L2 may each independently be substituted or unsubstituted C1-C10 alkyl, for example substituted or unsubstituted C1-C5 alkyl.

In one embodiment, the first external electron donor may be represented by Formula 3-1 below, and the second external electron donor may be represented by Formula 3-2 below:

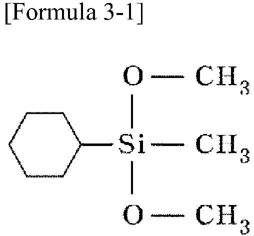

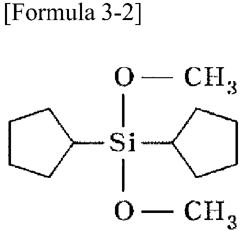

According to one embodiment, the external electron donor may be included in an amount of about 30 wt% to about 50 wt% based on 100 wt% of the total Ziegler-Natta catalyst for olefin polymerization. In a specific embodiment, the amount may be about 32 wt% to about 48 wt%, for example about 32 wt% to about 36 wt%, about 36 wt% to about 40 wt%, about 40 wt% to about 44 wt%, or about 44 wt% to about 48 wt%. Within the above range, the stability of catalyst active sites is high, and there may be no problem of reduction in activity due to poisoning of the catalyst active sites.

According to one embodiment, the external electron donor represented by Chemical Formula 3 may be included in an amount of about 95 wt% or more, preferably about 99 wt% to about 100 wt%, more preferably about 100 wt%, based on 100 wt% of the total external electron donor contained in the Ziegler-Natta catalyst. Within the above range, the effect of the present invention may be easily achieved. Here, the "total external electron donor" may mean compounds known to those skilled in the art as compounds independently contained relative to the pro-catalyst in the olefin Ziegler-Natta catalyst and serving to stabilize the catalyst active sites of the titanium compound.

The internal electron donor is selected such that, when the external electron donor is included in the olefin Ziegler-Natta catalyst, a polyolefin having excellent processability, that is, satisfying a specific range of density, melt index, and melt flow ratio, can be prepared. The internal electron donor makes it possible to prepare a polyolefin resin having excellent processability by providing various active sites when the external electron donor is applied.

In the present invention, with respect to the external electron donor, the internal electron donor includes a mixture of the first internal electron donor represented by Chemical Formula 4, the second internal electron donor represented by Chemical Formula 5, and the third internal electron donor represented by Chemical Formula 6, and the molar ratio of the external electron donor to the mixture is about 115 to about 130. In a specific embodiment, the molar ratio may be about 117 to about 128, for example about 117 to about 121, about 121 to about 125, or about 125 to about 128.

In one specific embodiment, in Chemical Formula 4, R4 and R5 may independently be branched C3-C10 alkyl or C3-C5 alkyl. For example, in Chemical Formula 4, R4 and R5 may independently be terminally branched C3-C10 alkyl or C3-C5 alkyl. The first internal electron donor represented by Chemical Formula 4 may comprise at least one compound selected from the compounds represented by any one of Formulae 4-1 to 4-3 below:

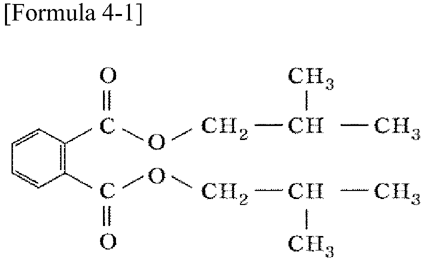

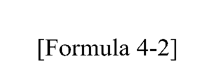

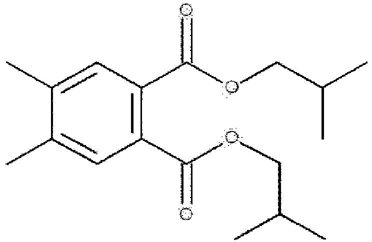

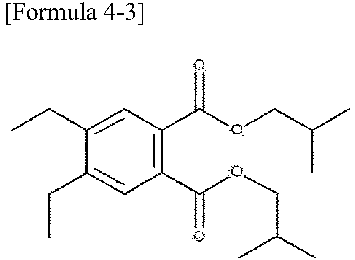

In one specific embodiment, in Chemical Formula 5, R7 may be linear C1-C10 alkyl or linear C1-C5 alkyl. In Chemical Formula 5, R8 may be branched C2-C10 alkyl or C2-C5 alkyl. For example, in Chemical Formula 5, R8 may be terminally branched C2-C10 alkyl or C2-C5 alkyl. The second internal electron donor represented by Chemical Formula 5 may comprise at least one compound selected from the compounds represented by any one of Formulae 5-1 to 5-4 below:

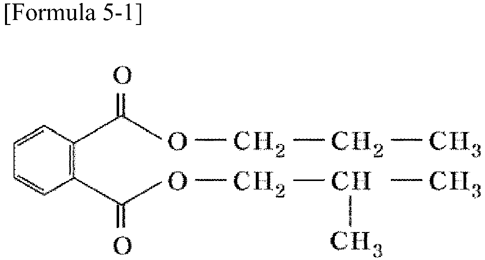

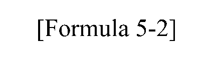

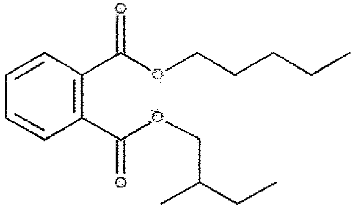

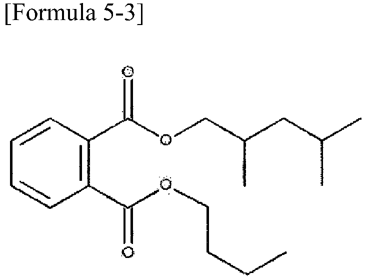

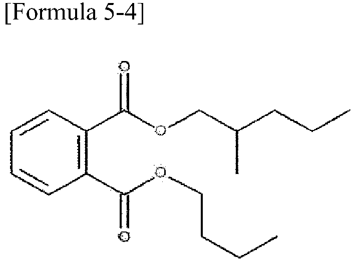

In one specific embodiment, in Chemical Formula 6, R10 and R11 may each independently be linear C1-C10 alkyl or linear C1-C5 alkyl. For example, the third internal electron donor represented by Chemical Formula 6 may comprise at least one compound selected from the compounds represented by any one of Formulae 6-1 to 6-3 below:

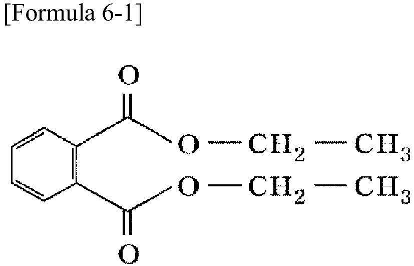

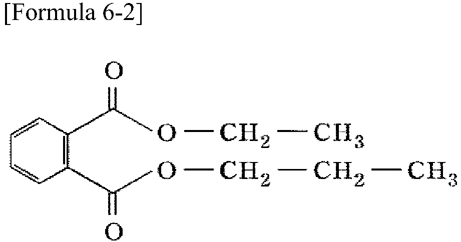

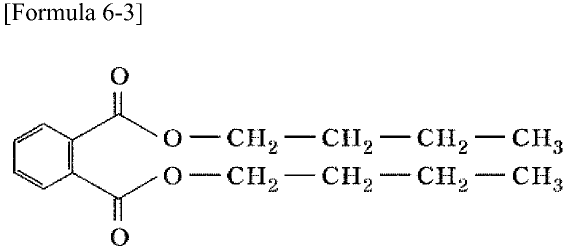

According to one embodiment, the mixture of the first internal electron donor, the second internal electron donor, and the third internal electron donor may be included in an amount of about 95 wt% or more, preferably about 99 wt% to about 100 wt%, more preferably about 100 wt%, based on 100 wt% of the total internal electron donor contained in the Ziegler-Natta catalyst.

The titanium compound and the external electron donor may be included at a molar ratio of about 1:3 to about 1:9, preferably about 1:4 to about 1:8. In a specific embodiment, the molar ratio may be about 1:3.2 to about 1:8.8, for example about 1:3.2 to about 1:4.6, about 1:4.6 to about 1:6, about 1:6 to about 1:7.4, or about 1:7.4 to about 1:8.8. Within the above range, the stability of catalyst active sites is excellent, and there may be no problem of reduction in catalyst activity due to poisoning of the catalyst active sites.

According to another specific embodiment, the Ziegler-Natta catalyst comprises a Ziegler-Natta pro-catalyst for olefin polymerization comprising the titanium compound represented by Chemical Formula 1, the magnesium compound represented by Chemical Formula 2, and an internal electron donor; the organoaluminum compound represented by Chemical Formula 7; and the external electron donor represented by Chemical Formula 3, wherein the internal electron donor is a mixture of a first internal electron donor selected from Chemical Formula 8, Chemical Formula 5, and Chemical Formula 9; and a second internal electron donor selected from Chemical Formula 8, Chemical Formula 5, and Chemical Formula 9 and different from the first internal electron donor, and based on 10 moles of the mixture, the first internal electron donor : the second internal electron donor is included at a molar ratio of about 3:7 to about 7:3. In a specific embodiment, the molar ratio may be about 3.5:6.5 to about 6.5:3.5, for example about 4:6 to about 6:4, about 4.5:5.5 to about 5.5:4.5, or about 5:5: 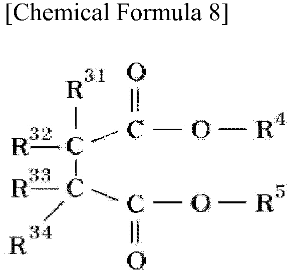 (In Chemical Formula 8,
R³¹, R³², R³³, and R³⁴ are each independently one selected from the group consisting of hydrogen, substituted or unsubstituted C1-C20 alkyl, substituted or unsubstituted C3-C20 cycloalkyl, and substituted or unsubstituted C3-C20 aryl, or R31 and R33 may be linked to each other to form a substituted or unsubstituted C3-C20 cycloalkyl group,
R⁴ and R⁵ are independently one selected from the group consisting of substituted or unsubstituted C1-C20 alkyl, substituted or unsubstituted C3-C20 cycloalkyl, and substituted or unsubstituted C3-C20 aryl, and
in the substituted or unsubstituted group, the substituent is independently at least one selected from the group consisting of halogen, cyano, nitro, and C1-C8 alkyl.) 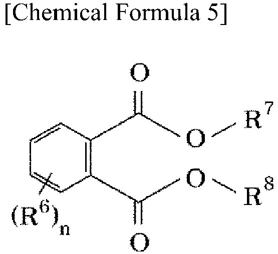 (In Chemical Formula 5,
   R⁶, R⁷, and R⁸ are independently one selected from the group consisting of substituted or unsubstituted C1-C20 alkyl, substituted or unsubstituted C3-C20 cycloalkyl, and substituted or unsubstituted C3-C20 aryl,
   n is an integer of 0 to 4, and
   in the substituted or unsubstituted group, the substituent is independently at least one selected from the group consisting of halogen, cyano, nitro, and C1-C8 alkyl.) 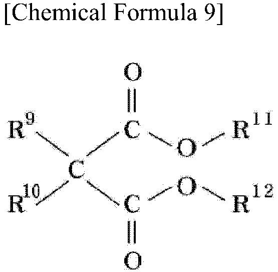 (In Chemical Formula 9,
      R⁹ and R¹⁰ are each independently one selected from the group consisting of hydrogen, substituted or unsubstituted C1-C20 alkyl, substituted or unsubstituted C3-C20 cycloalkyl, and substituted or unsubstituted C3-C20 aryl, or R9 and R10 may be linked to each other to form a substituted or unsubstituted C3-C20 cycloalkyl group,
      R¹¹ and R¹² are each independently one selected from the group consisting of substituted or unsubstituted C1-C20 alkyl, substituted or unsubstituted C3-C20 cycloalkyl, and substituted or unsubstituted C3-C20 aryl, and
      in the substituted or unsubstituted group, the substituent is independently at least one selected from the group consisting of halogen, cyano, nitro, and C1-C8 alkyl.)

In a specific embodiment, the first internal electron donor : the second internal electron donor may be included at a molar ratio of about 3:7, about 3.5:6.5, about 4:6, about 4.5:5.5, about 5:5, about 5.5:4.5, about 6:4, about 6.5:3.5, or about 7:3.

In a specific embodiment, the compound of Chemical Formula 8 is a diethyl diester compound and may comprise at least one compound selected from the compounds represented by any one of Formulae 8-1 to 8-7 below:

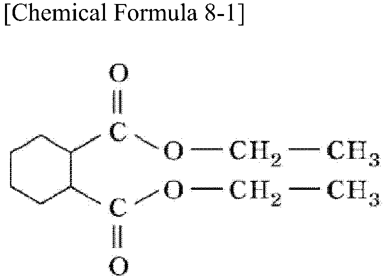

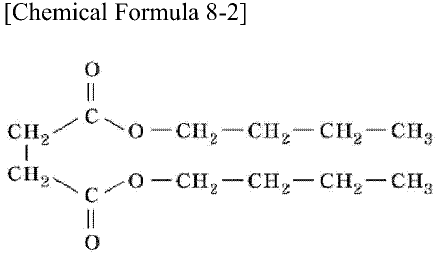

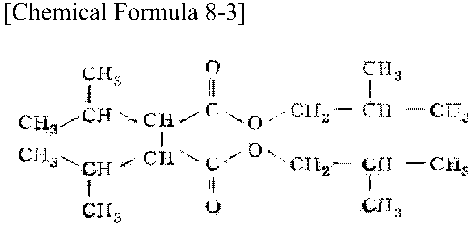

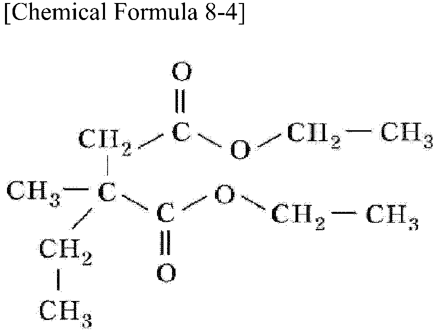

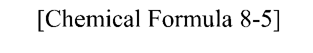

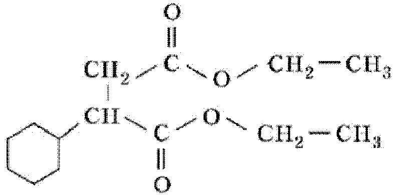

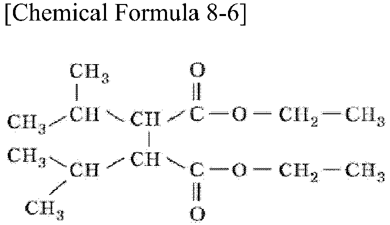

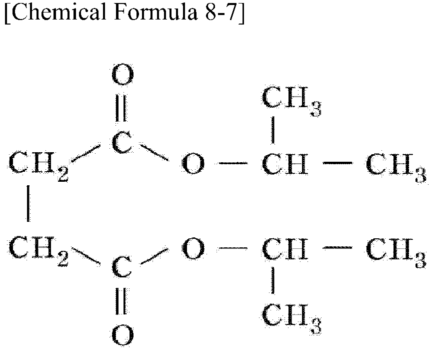

The compound of Chemical Formula 9 is a diethyl diester compound and may comprise at least one compound selected from the compounds represented by any one of Formulae 9-1 to 9-4 below:

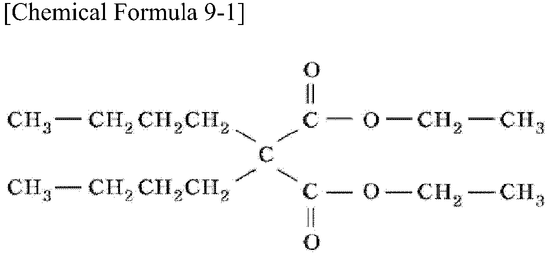

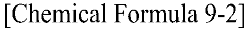

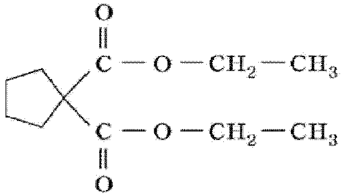

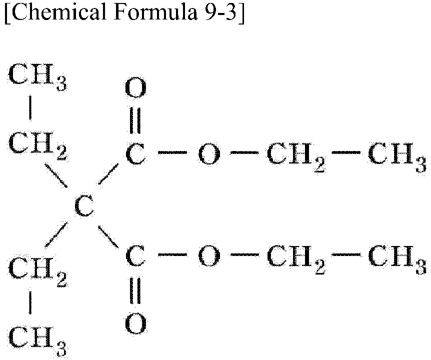

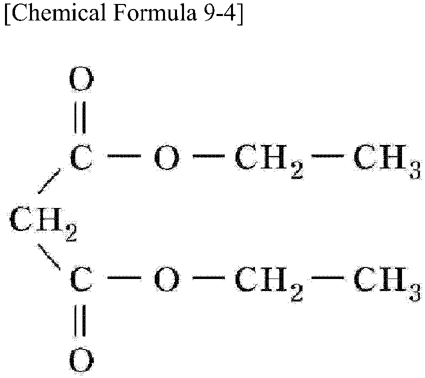

According to one embodiment, with respect to 1 mole of the external electron donor, the internal electron donor, that is, the mixture, may be included in an amount of about 0.002 to about 0.008 mole, preferably about 0.003 to about 0.004 mole or about 0.007 to about 0.008 mole. Within the above range, polyethylene satisfying the above-described density, melt index, and melt flow ratio may be easily prepared.

In a specific embodiment, polymerization may be carried out while controlling the particle size of the catalyst to less than 60 µm. The particle size means a particle diameter measured using SEM (scanning electron microscope). In a specific embodiment, the particle diameter may be greater than about 0 and less than about 60 µm, preferably about 0.01 to about 50 µm, for example about 0.01 to about 2 µm, about 2 to about 14 µm, about 14 to about 26 µm, about 26 to about 38 µm, or about 38 to about 50 µm. By controlling the particle size within the above range during polymerization, heat resistance, melt processability, and adhesive performance may be secured.

Specifically, propylene monomer may be included and copolymerized in an amount of greater than about 0 and less than or equal to about 5 wt%, for example about 1 to about 3 wt%, preferably about 1.1 to about 2 wt%, based on the total monomer content. Within the above range, excellent heat resistance and processability may be secured at the same time.

In addition, if necessary, conventional additives may be added before and/or after polymerization within a range not impairing the object of the invention.

The prepared polyethylene may be melt-spun to prepare it in the form of fibers. Since the polyethylene of the present invention has an oxidative induction time of about 10 minutes or more, for example about 10 to about 20 minutes, specifically about 10 to about 15 minutes, at a temperature of about 210 to about 230°C as measured by a rotational rheometer, and a peak corresponding to polypropylene is present upon NMR measurement, melt spinnability is excellent and yarn breakage does not occur. Since such melt spinnability is excellent, fibers having a diameter of greater than about 0 and less than about 100 µm, for example about 1 to about 25 µm, about 25 to about 50 µm, about 50 to about 75 µm, or about 75 to about 99 µm, may also be prepared.

A nonwoven fabric may be prepared using the polyethylene fibers, and according to a specific embodiment, fuzz generation may be minimized and excellent adhesiveness may be exhibited.

Another aspect of the present invention relates to a method for preventing yarn breakage during melt spinning of polyethylene. Conventionally, a method of increasing the proportion of low-molecular-weight components has been used for melt spinning, but in this case there was a problem in that yarn breakage occurred. In the present invention, by using polyethylene polymerized by controlling the particle size of the Ziegler-Natta catalyst, yarn breakage during melt spinning can be prevented. In a specific embodiment, the polyethylene is characterized in that it has an oxidative induction time of about 10 minutes or more, for example about 10 to about 20 minutes, specifically about 10 to about 15 minutes, at a temperature of about 210 to about 230°C as measured by a rotational rheometer, and a peak corresponding to polypropylene is present upon NMR measurement.

Hereinafter, the present invention will be described in more detail through Examples; however, these Examples are for illustrative purposes only and should not be construed as limiting the present invention.

### Examples

### Preparation Example: Synthesis of Ziegler-Natta Catalyst

4 g of a magnesium compound Mg(OC2H5)2 carrier and 8 ml of TiCl4, which is a titanium compound, were put into 12 ml of toluene, and a mixture of Formula 4-1 (4.5 mmol), Formula 5-1 (0.45 mmol), Formula 6-1 (0.45 mmol), Formula 6-2 (0.45 mmol), and Formula 6-3 (0.45 mmol) was added thereto as a mixture of internal electron donors to prepare a pro-catalyst. Thereafter, 0.18 ml of Formula 3-2 was additionally added as an external electron donor, and 2 mmol of triethylaluminum, which is an organoaluminum compound (co-catalyst), was additionally added (2 ml of a 1 M hexane solution), and a Ziegler-Natta catalyst was prepared while stirring at 300 rpm.

### Examples 1 to 3

Ethylene was polymerized by selecting particles of the Ziegler-Natta catalyst prepared in the above Preparation Example having a particle size of less than 60 µm, while propylene monomer was charged in the amounts shown in Table 1. The prepared polyethylene was melt-spun under extrusion conditions of 230 to 250°C to prepare polyethylene fibers. The physical properties of the prepared polyethylene fibers were measured according to the following methods for evaluating physical properties, and the results are shown in Table 1 below.

### Comparative Examples 1 to 2

The same procedure as in Example 1 was performed except that propylene was not charged.

### Comparative Example 3

The same procedure as in Example 1 was performed except that the catalyst prepared in the Preparation Example was used without controlling the particle size. The particle size distribution of the catalyst was D10 = 10 µm, D50 = 62 µm, and D90 = 100 µm.

**Table 1**

| Sample | | Units | Comparative Example 1 | Comparative Example 2 | Comparative Example 3 | Example 1 | Example 2 | Example 3 |
|---|---|---|---|---|---|---|---|---|
| MI(190°C) | | g/10min | 19 | 20 | 1.1 | 20 | 24 | 35 |
| MFR(190°C) | | - | 26 | 21 | 25 | 24 | 24 | 23 |
| Density | | g/cm³ | 0.956 | 0.957 | 0.954 | 0.954 | 0.955 | 0.956 |
| NMR | | PP content (wt%) | - | - | 1.5 | 1.5 | 1.2 | 1.4 |
| Tm | | °C | 132 | 131 | 134 | 129 | 130 | 130 |
| Tc | | °C | 117 | 113 | 118 | 118 | 118 | 118 |
| Mw | | g/mol | 65,671 | 54,873 | 124,500 | 55,914 | 52,844 | 45,065 |
| PDI | | - | 6.7 | 4.5 | 8.5 | 7.4 | 7.3 | 9.4 |
| UTM | Tensile strength | Kg/cm² | 266 | 273 | - | 282 | 295 | 270 |
| Oxidative induction time (OIT) / oxidation stability | | min | 7.75 | 0.75 | 9.5 | 11.0 | 11.8 | 10.3 |
| Gel | >400µm, 1m² | ea | 179 | 795 | 128 | 102 | 36 | 136 |
| | Total, 1m² | ea | 1,122 | 9,646 | 3,420 | 1,515 | 899 | 1,457 |
| Thermal adhesiveness | | | X | X | X | O | O | O |
| Melt-spinning index (MSI) | | - | 0 | 0 | 1.16 | 35.6 | 111.4 | 38.2 |

### Methods for Evaluating Physical Properties

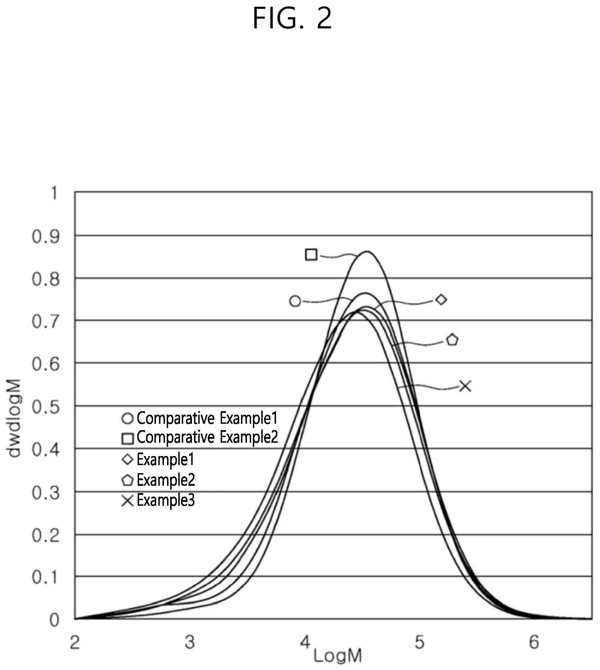

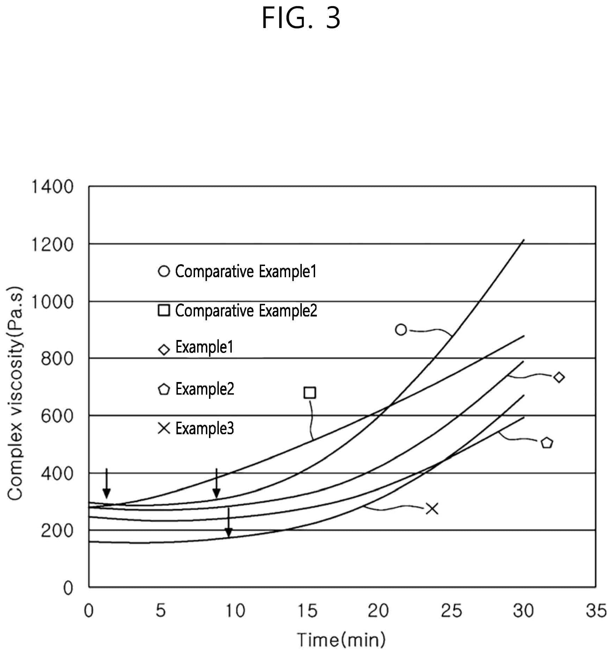

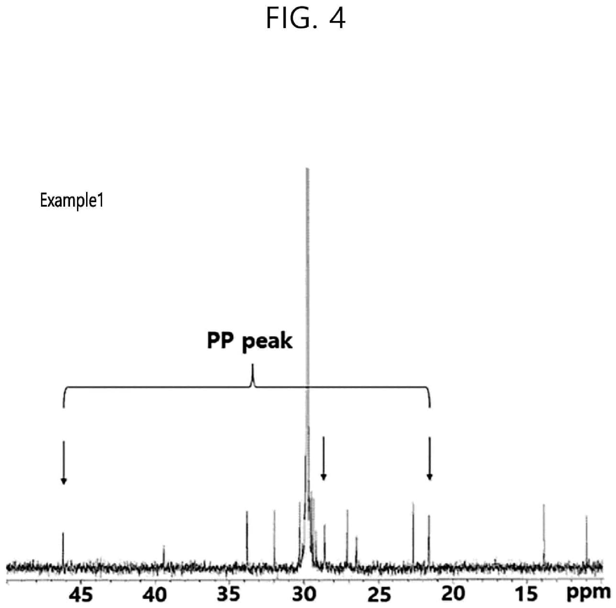

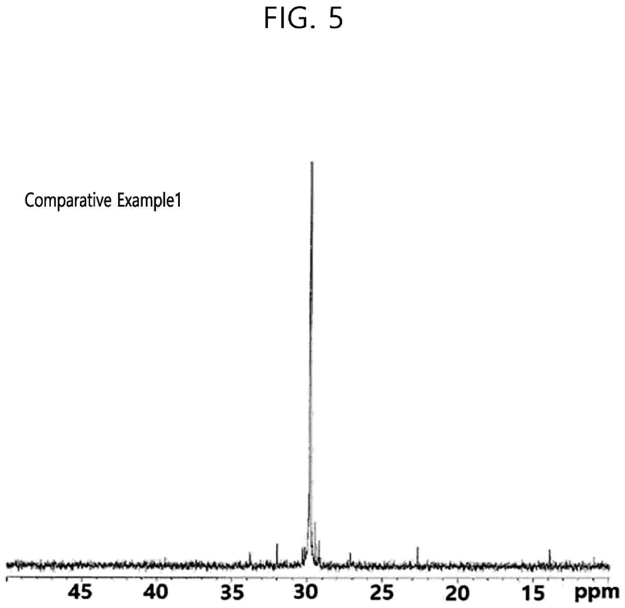

(1) Melt index (MI, g/10 min): The melt index (MI2.16) was measured at 190°C under a load of 2.16 kg according to ASTM D1238.
(2) Melt flow ratio (MFR): After measuring the melt index (MI21.6) at 190°C under a load of 21.6 kg according to ASTM D1238, it was obtained from MI_{21.6}/MI_{2.16}.
(3) Density: The density (g/ cm³) of the polyethylene was measured according to ASTM D1505.
(4) NMR: NMR of the polyethylene was measured to confirm the presence or absence and the content of the peak corresponding to polypropylene. The NMR results of Example 1 and Comparative Example 1 are shown in FIG. 4 and FIG. 5, respectively.
(5) Tm and Tc: The melting point and crystallization temperature were obtained using a differential scanning calorimeter (DSC), respectively.
(6) Weight average molecular weight and PDI: 5 mg of the sample was dissolved in 2 ml of chloroform as a solvent, and the weight average molecular weight and the number average molecular weight were measured using gel permeation chromatography (GPC). The molecular weight distribution (PDI, Mw/Mn) was calculated by dividing the weight average molecular weight by the number average molecular weight. The GPC measurement results are shown in FIG. 2.
(7) Tensile strength (Kg/cm2): Measured according to ASTM D638.
(8) OIT (oxidation stability): The oxidative induction time was measured at a temperature of 210 to 230°C using a rotational rheometer. The Time Sweep results are shown in FIG. 3.
(9) Gel: After T-die extrusion of the resin for evaluation, the number of gels having a maximum diameter of 400 µm or more per 1 m² and the total number of gels were obtained using a gel foreign matter detector.
(10) Thermal adhesiveness: Upon thermal bonding after spinning, it was determined by SEM whether separation of the interface occurred; when separation of the interface occurred, it was evaluated as X, and when separation of the interface did not occur, it was evaluated as O.
(11) Melt-spinning index (MSI): The calculated value according to Formula 1 below was obtained. [Formula 1] $MSI = \frac{MI \times {\left(OIT\right)}^{2} \times P}{G}$

(In Formula 1, MI is the melt index of polyethylene (ASTM D1238, 190°C, 2.16 kg) (unit: g/10 min), OIT is the oxidative induction time at a temperature of 210 to 230°C as measured by a rotational rheometer (unit: min), P is the content of polypropylene (wt%), and G is the number of gels of 400 µm or more in 1 m².)

From the results of Table 1, it can be seen that the polyethylene of the present invention has a balance of heat resistance and excellent melt spinnability, adhesiveness, and tensile strength, as compared with Comparative Examples 1 to 3.

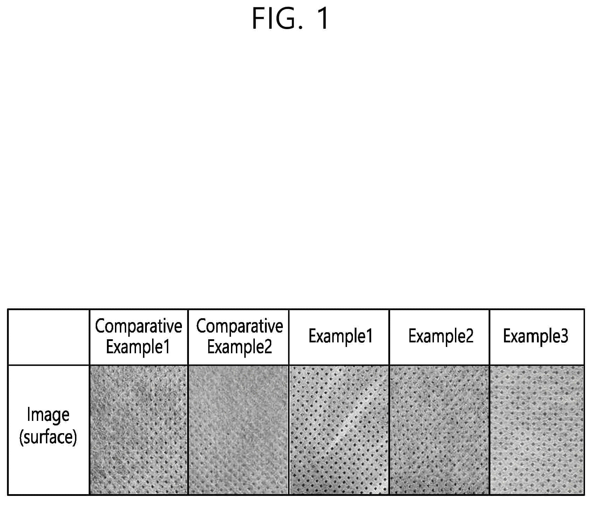

Nonwoven fabrics were prepared from the polyethylene fibers of Examples 1 to 3 and Comparative Examples 1 to 2, and surface photographs are shown in FIG. 1. As shown in FIG. 1, it can be confirmed that a large amount of fuzz was generated on the surfaces of Comparative Examples 1 to 2, as compared with Examples 1 to 3.

Simple modifications and changes of the present invention can be easily made by those skilled in the art, and all such modifications and changes are considered to fall within the scope of the present invention.

### [Industrial Availability]

The present invention has the effect of providing polyethylene having excellent melt-spinning processability, heat resistance, adhesiveness, and tensile strength and significantly reduced gel generation in a melt-spinning process, a method for preparing the same, fibers and nonwoven fabrics formed by melt-spinning the polyethylene, and a method for preventing yarn breakage during melt spinning of polyethylene.

## Claims

1. Polyethylene having an oxidative induction time of 10 minutes or more at a temperature of 210 to 230°C as measured by a rotational rheometer,
wherein a peak corresponding to polypropylene is present upon NMR measurement.

2. The polyethylene according to claim 1, wherein the polyethylene has a weight average molecular weight of 40,000 g/mol to 60,000 g/mol and a polydispersity index (PDI) of 7 or more.

3. The polyethylene according to claim 1, wherein the polyethylene comprises more than 0 and not more than 5 wt% of polypropylene.

4. The polyethylene according to claim 1, wherein the polyethylene has fewer than 150 gels having a maximum diameter of 400 µm or more per 1 m².

5. The polyethylene according to claim 1, wherein the polyethylene has a melt index (ASTM D1238, 190°C, 2.16 kg) of 15 to 40 g/10 min.

6. The polyethylene according to claim 1, wherein the polyethylene has a melt flow ratio (MFR, 190°C, MI_{21.6}/MI_{2.16}) of 20 to 30.

7. The polyethylene according to claim 1, wherein the polyethylene has a density of 0.948 to 0.965 g/cm³.

8. The polyethylene according to claim 1, wherein the polyethylene has a melt-spinning index (MSI) of 30 to 200 according to Formula 1 below: 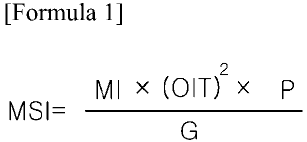 (In Formula 1, MI is the melt index of polyethylene (ASTM D1238, 190°C, 2.16 kg) (unit: g/10 min), OIT is the oxidative induction time at a temperature of 210 to 230°C as measured by a rotational rheometer (unit: min), P is the content of polypropylene (wt%), and G is the number of gels of 400 µm or more in 1 m².)

9. The polyethylene according to claim 1, wherein the polyethylene has fewer than 150 gels of 400 µm or more per 1 m².

10. The polyethylene according to claim 1, wherein the polyethylene has a tensile strength of 270 Kg/cm2 or more measured according to ASTM D638.

11. The polyethylene according to claim 1, wherein the polyethylene is used for melt spinning.

12. A polyethylene fiber formed by melt-spinning the polyethylene according to any one of claims 1 to 11.

13. The polyethylene fiber according to claim 12, wherein the polyethylene fiber has a diameter of more than 0 and less than 100 µm.

14. A nonwoven fabric formed from the polyethylene fiber according to claim 12.

15. A method for preparing polyethylene according to any one of claims 1 to 11, the method comprising polymerizing ethylene in the presence of a Ziegler-Natta catalyst.

16. The method for preparing polyethylene according to claim 15, wherein the method comprises polymerization while controlling the particle size of the Ziegler-Natta catalyst to less than 60 µm.

17. The method for preparing polyethylene according to claim 15, wherein the method comprises polymerization by charging propylene monomer in an amount of more than 0 and not more than 5 wt% based on the total monomer content.

18. A method for preventing yarn breakage during melt spinning of polyethylene, the method comprising using polyethylene polymerized by controlling the particle size of a Ziegler-Natta catalyst.

19. The method according to claim 18, wherein the polyethylene has an oxidative induction time of 10 minutes or more at a temperature of 210 to 230°C as measured by a rotational rheometer, and a peak corresponding to polypropylene is present upon NMR measurement.

20. The method according to claim 18, wherein the polyethylene has a weight average molecular weight of 40,000 g/mol to 60,000 g/mol and a polydispersity index (PDI) of 7 or more.
